(19) Europäisches Patentamt
European Patent Office
Office européen des brevets

(11) **EP 2 496 026 A2**

(12) **EUROPEAN PATENT APPLICATION**
published in accordance with Art. 153(4) EPC

(43) Date of publication:
**05.09.2012   Bulletin 2012/36**

(21) Application number: **10827140.4**

(22) Date of filing: **29.10.2010**

(51) Int Cl.:
**H04W 52/04** $^{(2009.01)}$      **H04W 48/12** $^{(2009.01)}$

(86) International application number:
**PCT/KR2010/007551**

(87) International publication number:
**WO 2011/053056 (05.05.2011 Gazette 2011/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2009   US 255872 P**

(71) Applicant: **LG Electronics Inc.**
**Seoul 150-721 (KR)**

(72) Inventors:
• **KIM, Dong Cheol**
  **Anyang-si**
  **Gyeonggi-do 431-080 (KR)**

• **CHO, Han Gyu**
  **Anyang-si**
  **Gyeonggi-do 431-080 (KR)**
• **CHUNG, Jae Hoon**
  **Anyang-si**
  **Gyeonggi-do 431-080 (KR)**

(74) Representative: **Katérle, Axel et al**
**Wuesthoff & Wuesthoff**
**Patent- und Rechtsanwälte**
**Schweigerstraße 2**
**81541 München (DE)**

(54) **APPARATUS AND METHOD FOR TRANSCEIVING UPLINK TRANSMISSION POWER CONTROL INFORMATION IN A MULTI-CARRIER COMMUNICATION SYSTEM**

(57)    Disclosed are an apparatus and method for transceiving uplink transmission power control information in a multi-carrier communication system. As an LTE-A system employs multiple carriers, overhead may increase since a base station performs signaling in consideration of a carrier index, a TPC command index, etc. However, according to various embodiments of the present invention, overhead for signaling a TPC command and the like can be significantly reduced.

FIG. 6

Example:
Use PDCCH in CC1 to
schedule PDSCH in CC2

DL Control

DL/UL Data

freq

610
CC1

620
CC2

## Description

**Field of the Invention**

The present invention relates to a method and apparatus for transceiving uplink transmission power control information.

**Background Art**

As a representative example of a wireless communication system of the present invention, 3rd Generation Partnership Project Long Term Evolution (3GPP LTE) and LTE-Advanced (LTE-A) communication systems will hereinafter be described in detail.

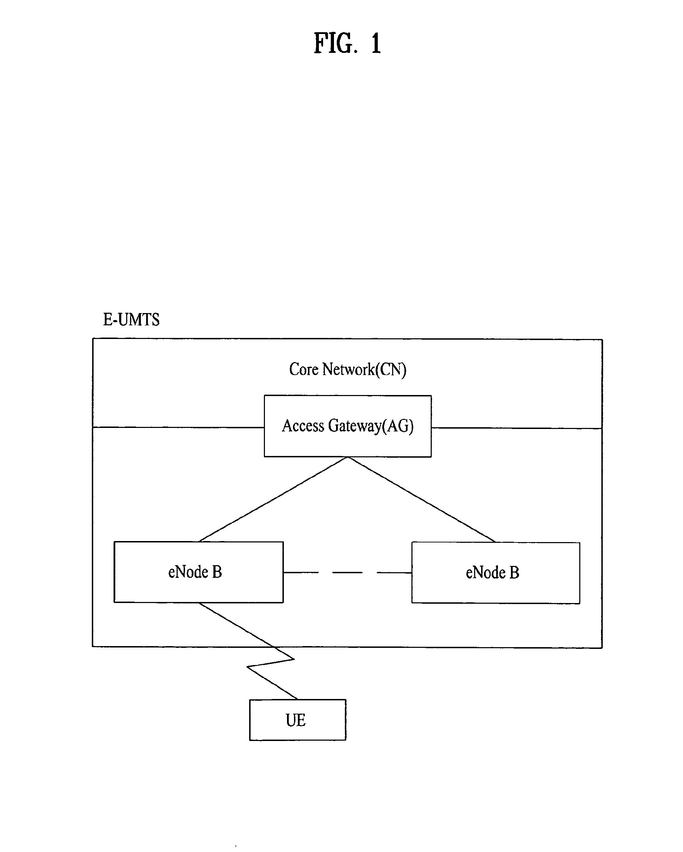

FIG. 1 is a conceptual diagram illustrating an Evolved Universal Mobile Telecommunications System (E-UMTS) network structure as an exemplary mobile communication system. In particular, the Enhanced Universal Mobile Telecommunications System (E-UMTS) has evolved from a legacy UMTS system, and basic standardization thereof is now being conducted by the 3rd Generation Partnership Project (3GPP). E-UMTS may also be referred to as Long Term Evolution (LTE). For details of the technical specifications of UMTS and E-UMTS, refer to Release 7 and Release 8 of "3rd Generation Partnership Project; Technical Specification Group Radio Access Network".

As shown in FIG. 1, the E-UMTS system is broadly made up of a User Equipment (UE) 120, base stations (or eNode-Bs) 110a and 110b, and an Access Gateway (AG) which is located at an end of a network (E-UTRAN) and is connected to an external network. Generally, an eNode-B can simultaneously transmit multiple data streams for a broadcast service, a multicast service and/or a unicast service.

Each eNode-B includes one or more cells. One cell of the eNode-B is set to use a bandwidth such as 1.25, 2.5, 5, 10, 15 or 20MHz to provide a downlink or uplink transmission service to user equipments (UEs). Here, different cells may be set to use different bandwidths. The eNode-B controls transmission and reception of data for several UEs. In association with downlink (DL) data, the eNode-B transmits downlink (DL) scheduling information to a corresponding UE, so as to inform the corresponding UE of time/frequency domains where data is to be transmitted, coding information, data size information, Hybrid Automatic Repeat and reQuest (HARQ) - related information, and the like. In association with uplink (UL) data, the eNode-B transmits UL scheduling information to the corresponding UE, so that it informs the corresponding UE of time/frequency domains capable of being used by the corresponding UE, coding information, data size information, HARQ-related information, and the like. An interface for transmission of user traffic or control traffic may be used between eNode-Bs. A Core Network (CN) may include an Access Gateway (AG) and a network node for user registration of the UE. The AG manages mobility of a UE on the basis of a Tracking Area (TA) composed of several cells.

Although wireless communication technology has been developed to LTE technology on the basis of WCDMA technology, users and enterprises continuously demand new features and services. In addition, other wireless access technologies are being developed, such that there is a need for new or improved wireless access technology in order to remain competitive in the long run. For example, reduction in cost per bit, increase of service availability, adaptive frequency band utilization, a simple structure, an open-type interface, and appropriate user equipment (UE) power consumption are needed for new or improved wireless access technology.

Recently, 3GPP has been establishing a standard task for a subsequent technique of LTE. In this specification, such a technique is referred to as "LTE-Advanced" or "LTE-A". One of the main differences between an LTE system and an LTE-A system is a system bandwidth.

The LTE-A system is aimed at supporting a broadband of a maximum of 100 MHz, and to this end, the LTE-A system is designed to use a carrier aggregation or bandwidth aggregation technique using a plurality of frequency blocks. Carrier aggregation employs a plurality of frequency blocks as one big logical frequency band in order to use a wider frequency band. A bandwidth of each frequency block may be defined based on a bandwidth of a system block used in the LTE system. Each frequency block is transmitted using a component carrier.

Carrier aggregation technology is applied to the LTE-A system acting as the next generation communication system, and it is impossible to control transmission (Tx) power of the LTE-A system using signaling of a legacy single-carrier based TPC command and a DCI message format. However, a method (and the like) for signaling a message (and the like) for uplink transmission power control of a UE in a multi-carrier support system has not yet been disclosed.

**Detailed Description of the Invention**

**Technical Problem**

Accordingly, the present invention is directed to an apparatus and method for transmitting/receiving uplink transmission power control information in a multi-carrier support communication system that substantially obviate one or more problems due to limitations and disadvantages of the related art. An object of the present invention is to provide a method for allowing an eNode B (eNB) to transmit uplink transmission power control (TPC) information in a multi-carrier support communication system.

Another object of the present invention is to provide a method for allowing an eNode B (eNB) to receive uplink TPC information in a multi-carrier support communication system.

Another object of the present invention is to provide a base station (BS) apparatus for allowing an eNode B (eNB) to transmit uplink TPC information in a multi-carrier support communication system.

Another object of the present invention is to provide a UE apparatus for allowing an eNode B (eNB) to receive uplink TPC information in a multi-carrier support communication system.

It is to be understood that technical objects to be achieved by the present invention are not limited to the aforementioned technical objects and other technical objects which are not mentioned herein will be apparent from the following description to one of ordinary skill in the art to which the present invention pertains.

**Technical Solution**

The object of the present invention can be achieved by providing a method for transmitting uplink transmit power control (TPC) information by an eNode B (eNB) in a multi-carrier support communication system, the method including: transmitting a downlink control information (DCI) message including the TPC information to each user equipment (UE) through a physical downlink control channel (PDCCH), wherein the DCI message includes contiguous TPC index value information allocated to the multiple carriers for each UE and each TPC command corresponding to each of the contiguous TPC index values, and wherein the each TPC command corresponds to each of the multiple carriers.

The DCI message may further include at least one of a radio network temporary identifier (RNTI) for a physical uplink control channel (PUCCH) for each UE and an RNTI for one physical uplink shared channel (PUSCH).

The method may further include transmitting one TPC index value from among contiguous TPC index values allocated to the multiple carriers for the each UE through a higher layer signaling.

The method may further include transmitting a carrier indicator including information regarding a cross-carrier scheduled carrier to each UE.

One signaled TPC index value may be a TPC index start value from among the contiguous TPC index values. The contiguous TPC index values from a TPC index value corresponding to the TPC index start value of the each UE may correspond to an uplink carrier index allocated to the each UE. A lowest TPC index of the contiguous TPC index values allocated to the each UE may first mapped to the lowest uplink carrier index allocated to the each UE in such a manner that the contiguous TPC index values starting from the lowest TPC index are sequentially mapped to uplink carrier indexes arranged in ascending numerical order. The one signaled TPC index value may be a TPC index start value from among the contiguous TPC index values.

The contiguous TPC index values starting from a TPC index value corresponding to a TPC index start value of the each UE may correspond to an uplink cross-carrier index allocated to the each UE. The contiguous TPC index values allocated to the each UE start from the lowest TPC index, such that the lowest TPC index is first mapped to the lowest uplink cross-carrier index allocated to the each UE in such a manner that the contiguous TPC index values starting from the lowest TPC index are sequentially mapped to uplink cross-carrier indexes arranged in ascending numerical order.

Each UE may be a UE comprised of a group for the TPC command.

In another aspect of the present invention, a method for receiving uplink transmit power control (TPC) information by a user equipment (UE) in a multi-carrier support communication system includes receiving a downlink control information (DCI) message including the TPC information from an eNode B (eNB) over a physical downlink control channel (PDCCH), wherein the DCI message includes contiguous TPC index value information allocated to the multiple carriers for each UE and each TPC command corresponding to each of the contiguous TPC index values, and each TPC command corresponds to each of the multiple carriers.

The method may further include decoding at least one of a radio network temporary identifier (RNTI) for a physical uplink control channel (PUCCH) for each UE and an RNTI for one physical uplink shared channel (PUSCH), the two RNITs being included in the DCI message.

The method may further include receiving one TPC index value from among contiguous TPC index values allocated to the multiple carriers of the each UE from the eNode B (eNB). The method may further include receiving a carrier indicator including information regarding a cross-carrier scheduled carrier from the eNode B (eNB).

One signaled TPC index value may be a TPC index start value from among the contiguous TPC index values. The contiguous TPC index values from a TPC index value corresponding to the TPC index start value of the each UE may correspond to an uplink carrier index allocated to the each UE.

In another aspect of the present invention, an eNode B (eNB) apparatus for transmitting uplink transmit power control (TPC) information in a multi-carrier support communication system includes a transmitter for transmitting a downlink control information (DCI) message including the TPC information to each user equipment (UE) through a physical downlink control channel (PDCCH), wherein the DCI message includes contiguous TPC index value information allocated to the multiple carriers for each UE and each TPC command corresponding to each of the contiguous TPC index values, and each TPC command corresponds to each of the multiple carriers.

In another aspect of the present invention, a user equipment (UE) apparatus for receiving uplink transmit power control (TPC) information in a multi-carrier support communication system includes a receiver for receiving a downlink control information (DCI) message including the TPC information from an eNode B (eNB) over a physical downlink control channel (PDCCH), wherein the DCI message includes contiguous TPC index value information allocated to the multiple carriers for each UE and each TPC command corresponding to each of the contiguous TPC index values, and each TPC command corresponds to each of the multiple carriers.

The UE apparatus may further include a processor for decoding at least one of a radio network temporary identifier (RNTI) for a physical uplink control channel (PUCCH) for each UE and an RNTI for one physical uplink shared channel (PUSCH), the two RNITs being included in the DCI message.

The UE apparatus may further include a receiver for receiving information of one TPC index value from among contiguous TPC index values allocated to multiple carriers for each UE from the eNode B (eNB) and a carrier indicator including information of a cross-carrier scheduled carrier, wherein the processor matches the TPC command corresponding to each of contiguous allocated TPC indexes starting from the one received TPC index value to an index of the cross-carrier scheduled carrier, thereby controlling transmission power of the multiple carriers..

**Effects of the Invention**

As is apparent from the above description, exemplary embodiments of the present invention have the following effects. Various embodiments of the present invention are applied to a multi-carrier support communication system, such that a TPC command of uplink transmission power control can be effectively transmitted, resulting in increased throughput of a communication system.

It will be appreciated by persons skilled in the art that the effects that can be achieved with the present invention are not limited to what has been particularly described hereinabove and other advantages of the present invention will be more clearly understood from the following detailed description taken in conjunction with the accompanying drawings.

**Brief Description of the Drawings**

The accompanying drawings, which are included to provide a further understanding of the invention, illustrate embodiments of the invention and together with the description serve to explain the principle of the invention. In the drawings:

FIG. 1 is a conceptual diagram illustrating an Evolved Universal Mobile Telecommunications System (E-UMTS) network structure as an example of a wireless communication system;

FIG. 2 is a block diagram illustrating an eNode B (eNB) and a UE for use in a wireless communication system;

FIG. 3 is a diagram illustrating a structure of a radio frame used in a 3GPP LTE system acting as an exemplary mobile communication system;

FIG. 4 is an exemplary structural diagram illustrating downlink and uplink subframes for use in a 3GPP LTE system acting as an exemplary mobile communication system according to the present invention;

FIG. 5 shows a downlink (DL) time-frequency resource grid structure for use in a 3GPP LTE system; and

FIG. 6 is a conceptual diagram illustrating exemplary cross-carrier scheduling needed when carrier aggregation technology is introduced into the LTE-A system.

**Best Mode for Carrying Out the Invention**

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention. The following detailed description includes specific details in order to provide a thorough understanding of the present invention. However, it will be apparent to those skilled in the art that the present invention may be practiced without such specific details. For example, the following description will be given centering upon a mobile communication system serving as a 3GPP LTE system, but the present invention is not limited thereto and the remaining parts of the present invention other than unique characteristics of the 3GPP LTE system are applicable to other mobile communication systems.

In some cases, in order to prevent ambiguity of the concepts of the present invention, conventional devices or apparatuses well known to those skilled in the art will be omitted and be denoted in the form of a block diagram on the basis of important functions of the present invention. Wherever possible, the same reference numbers will be used throughout the drawings to refer to the same or like parts.

In the following description, a terminal may refer to a mobile or fixed user equipment (UE), for example, a user equipment (UE), a mobile station (MS) and the like. Also, the base station (BS) may refer to an arbitrary node of a network end which communicates with the above terminal, and may include an eNode B (eNB), a Node B (Node-B), an access point (AP) and the like.

In a mobile communication system, the UE may receive information from the base station (BS) via a downlink, and may transmit information via an uplink. The information that is transmitted and received to and from the UE includes data and a variety of control information. A variety of physical channels are used according to categories of transmission (Tx) and reception (Rx) information of the UE.

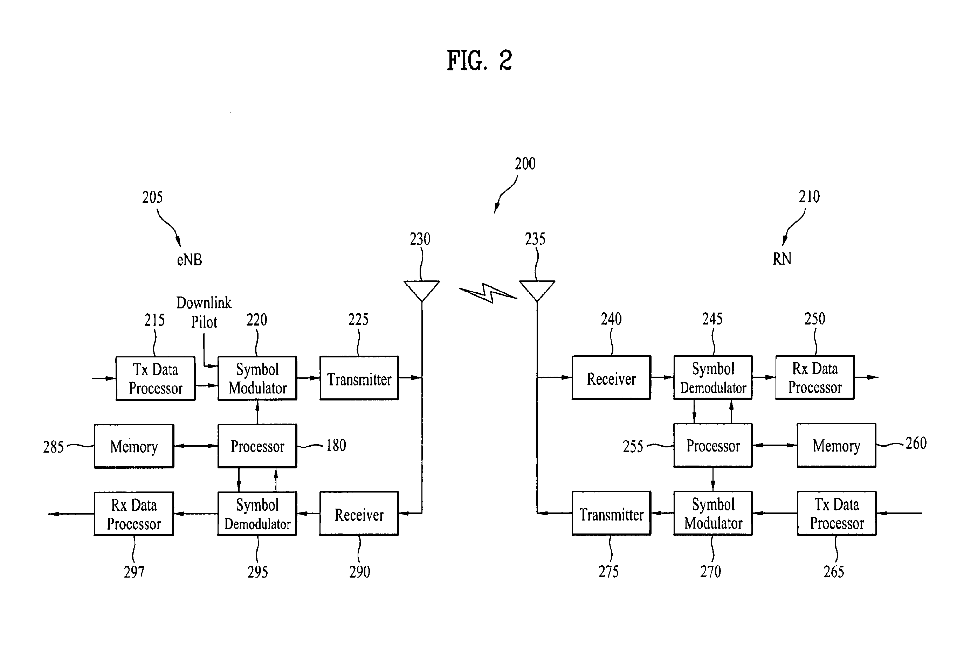

FIG. 2 is a block diagram illustrating an eNode B (eNB) 205 and a user equipment (UE) 210 for use in a wireless communication system 200 according to the present invention.

Although FIG. 2 shows one eNB 205 and one UE 210 for brief description of the wireless communication system 200, it should be noted that the wireless communication system 200 may further include one or more eNBs and/or one or more UEs.

Referring to FIG. 2, the eNB 205 may include a transmission (Tx) data processor 215, a symbol modulator 220, a transmitter 225, a transmission/reception antenna 230, a processor 280, a memory 285, a receiver 290, a symbol demodulator 295, and a reception (Rx) data processor 297. The UE 210 may include a Tx data processor 265, a symbol modulator 270, a transmitter 275, a transmission/reception antenna 235, a processor 255, a memory 260, a receiver 240, a symbol demodulator 255, and a Rx data processor 250. In FIG. 2, although one antenna 230 is used for the eNB 205 and one antenna 235 is used for the UE 210, each of the eNB 205 and the UE 210 may also include a plurality of antennas as necessary. Therefore, the eNB 205 and the UE 210 according to the present invention support a Multiple Input Multiple Output (MIMO) system. The eNB 205 according to the present invention can support both a Single User-MIMO (SU-MIMO) scheme and a Multi User-MIMO (MU-MIMO) scheme.

In downlink, the Tx data processor 215 receives traffic data, formats the received traffic data, codes the formatted traffic data, and interleaves the coded traffic data, and modulates the interleaved data (or performs symbol mapping upon the interleaved data), such that it provides modulation symbols (i.e., data symbols). The symbol modulator 220 receives and processes the data symbols and pilot symbols, such that it provides a stream of symbols.

The symbol modulator 220 multiplexes data and pilot symbols, and transmits the multiplexed data and pilot symbols to the transmitter 225. In this case, each transmission (Tx) symbol may be a data symbol, a pilot symbol, or a value of a zero signal (null signal). In each symbol period, pilot symbols may be successively transmitted during each symbol period. The pilot symbols may be an FDM symbol, an OFDM symbol, a Time Division Multiplexing (TDM) symbol, or a Code Division Multiplexing (CDM) symbol.

The transmitter 225 receives a stream of symbols, converts the received symbols into one or more analog signals, and additionally adjusts the one or more analog signals (e.g., amplification, filtering, and frequency upconversion of the analog signals), such that it generates a downlink signal appropriate for data transmission through an RF channel. Subsequently, the downlink signal is transmitted to the RN through the antenna 230.

Configuration of the UE 210 will hereinafter be described in detail. The antenna 235 of the UE 210 receives a DL signal from the eNB 205, and transmits the DL signal to the receiver 240. The receiver 240 performs adjustment (e.g., filtering, amplification, and frequency downconversion) of the received DL signal, and digitizes the adjusted signal to obtain samples. The symbol demodulator 245 demodulates the received pilot symbols, and provides the demodulated result to the processor 255 to perform channel estimation.

The symbol demodulator 245 receives a frequency response estimation value for downlink from the processor 255, demodulates the received data symbols, obtains data symbol estimation values (indicating estimation values of the transmitted data symbols), and provides the data symbol estimation values to the Rx data processor 250. The Rx data processor 250 performs demodulation (i.e., symbol-demapping) of data symbol estimation values, deinterleaves the demodulated result, decodes the deinterleaved result, and recovers the transmitted traffic data.

The processing of the symbol demodulator 245 and the Rx data processor 250 is complementary to that of the symbol modulator 220 and the Tx data processor 215 in the eNB 205.

The Tx data processor 265 of the UE 210 processes traffic data in uplink, and provides data symbols. The symbol modulator 270 receives and multiplexes data symbols, and modulates the multiplexed data symbols, such that it can provide a stream of symbols to the transmitter 275. The transmitter 275 receives and processes the stream of symbols to generate an uplink (UL) signal, and the UL signal is transmitted to the eNB 205 through the antenna 235.

The eNB 205 receives the UL signal from the UE 210 through the antenna 230. The receiver processes the received UL signal to obtain samples. Subsequently, the symbol demodulator 295 processes the symbols, and provides pilot symbols and data symbol estimation values received via uplink. The Rx data processor 297 processes the data symbol estimation value, and recovers traffic data received from the UE 210.

Processor 255 or 280 of the UE 210 or the eNB 205 commands or indicates operations of the UE 210 or the eNB 205. For example, the processor 255 or 280 of the UE 210 or the eNB 205 controls, adjusts, and manages operations of the UE 210 or the eNB 205. Each processor 255 or 280 may be connected to a memory unit 260 or 285 for storing program code and data. The memory 260 or 285 is connected to the processor 255 or 280, such that it can store the operating system, applications, and general files.

The processor 255 or 280 may also be referred to as a controller, a microcontroller), a microprocessor, a microcomputer, etc. In the meantime, the processor 255 or 280 may be implemented by various means, for example, hardware, firmware, software, or a combination thereof. In a hardware configuration, methods according to the embodiments of the present invention may be implemented by the processor 255 or 280, for example, one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, methods according to the embodiments of the present invention may be implemented in the form of modules, procedures, functions, etc. which perform the above-described functions or operations. Firmware or software implemented in the present invention may be contained in the processor 255 or 280 or the memory unit 260 or 285, such that it can be driven by the processor 255 or 280.

Radio interface protocol layers among the UE 210, the eNB 205, and a wireless communication system (i.e., network) can be classified into a first layer (L1 layer), a second layer (L2 layer) and a third layer (L3 layer) on the basis of the lower three layers of the Open System Interconnection (OSI) reference model widely known in communication systems. A physical layer belonging to the first layer (L1) provides an information transfer service through a physical channel. A Radio Resource Control (RRC) layer belonging to the third layer (L3) controls radio resources between the UE and the network. The UE 210 and the eNB 205 may exchange RRC messages with each other through the wireless communication network and the RRC layer.

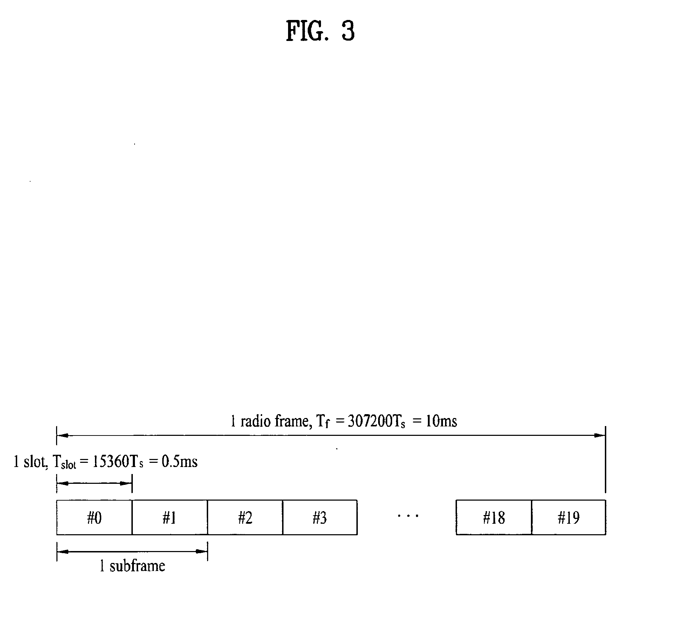

FIG. 3 is a diagram illustrating a structure of a radio frame used in a 3GPP LTE system acting as a mobile communication system.

Referring to FIG. 3, the radio frame has a length of 10ms ($327200*T_s$) and includes 10 subframes of equal size. Each subframe has a length of 1ms and includes two slots. Each slot has a length of 0.5ms ($15360*Tx$). In this case, $T_s$ represents a sampling time, and is expressed by '$T_s = 1/ (15kHz*2048) = 3.2552*10^{-8}$ (about 33ns)'. The slot includes a plurality of OFDM or SC-FDMA symbols in a time domain, and includes a plurality of resource blocks (RBs) in a frequency domain.

In the LTE system, one resource block includes twelve (12) subcarriers * seven (or six) OFDM (Orthogonal Frequency Division Multiplexing) symbols. A Transmission Time Interval (TTI) which is a transmission unit time of data can be determined in a unit of one or more subframes. The aforementioned structure of the radio frame is only exemplary, and various modifications can be made to the number of subframes contained in the radio frame or the number of slots contained in each subframe, or the number of OFDM or SC-FDMA symbols in each slot.

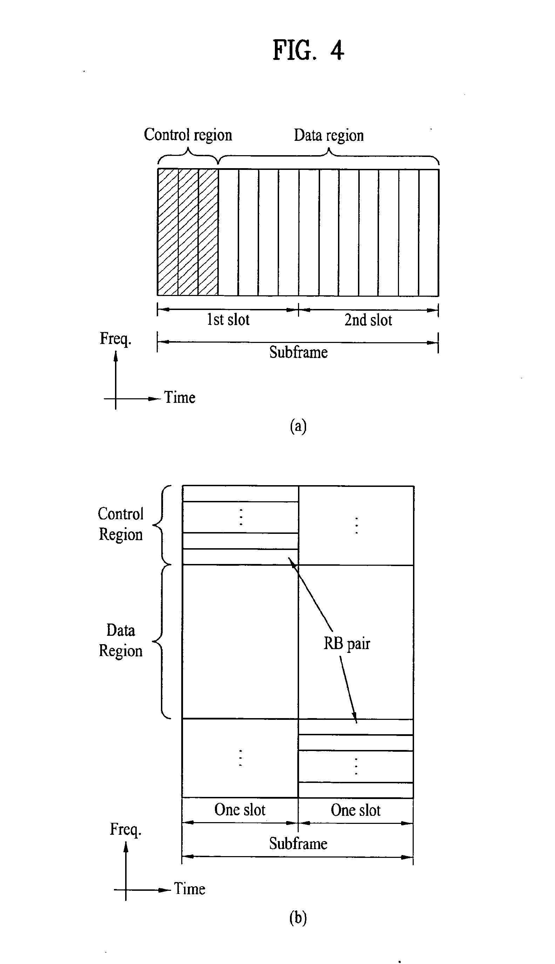

FIG. 4 is an exemplary structural diagram illustrating downlink and uplink subframes for use in a 3GPP LTE system acting as an exemplary mobile communication system according to the present invention.

Referring to FIG. 4(a), one downlink subframe includes two slots in a time domain. A maximum of three OFDM symbols located in the front of the downlink subframe are used as a control region to which control channels are allocated, and the remaining OFDM symbols are used as a data region to which a Physical Downlink Shared Channel (PDSCH) channel is allocated.

DL control channel for use in the 3GPP LTE system includes a Physical Control Format Indicator CHannel (PCFICH), a Physical Downlink Control Channel (PDCCH), a Physical Hybrid-ARQ Indicator CHannel (PHICH), and the like. The traffic channel includes a Physical Downlink Shared CHannel (PDSCH). PCFICH transmitted through a first OFDM symbol of the subframe may carry information about the number of OFDM symbols (i.e., the size of control region) used for transmission of control channels within the subframe. Control information transmitted through PDCCH is referred to as downlink control information (DCI). The DCI may indicate UL resource allocation information, DL resource allocation information, UL transmission power control commands of arbitrary UE groups, etc. PHICH may carry ACK (Acknowledgement) / NACK (Not-Acknowledgement) signals about an UL Hybrid Automatic Repeat Request (UL HARQ). That is, the ACK/NACK signals about UL data transmitted from the UE are transmitted over PHICH.

PDCCH acting as a DL physical channel will hereinafter be described in detail.

A base station (BS) may transmit information about resource allocation and transmission format (UL grant) of the PDSCH, resource allocation information of the PUSCH, information about Voice over Internet Protocol (VoIP) activation, etc. A plurality of PDCCHs may be transmitted within the control region, and the UE may monitor the PDCCHs. Each PFCCH includes an aggregate of one or more contiguous control channel elements (CCEs). The PDCCH composed of the aggregate of one or more contiguous CCEs may be transmitted through the control region after performing subblock interleaving. CCE is a logical allocation unit for providing a coding rate based on a Radio frequency (RF) channel status to the PDCCH. CCE may correspond to a plurality of resource element groups. PDCCH format and the number of available PDCCHs may be determined according to the relationship between the number of CCEs and the coding rate provided by CCEs.

Control information transmitted over PDCCH is referred to as downlink control information (DCI). The following Table 1 shows DCIs in response to DCI formats.

[Table 1]

| DCI Format | Description |
|---|---|
| DCI format 0 | used for the scheduling of PUSCH |
| DCI format 1 | used for the scheduling of one PDSCH codeword |
| DCI format 1A | used for the compact scheduling of one PDSCH codeword and random access procedure initiated by a PDCCH order |
| DCI format 1B | used for the compact scheduling of one PDSCH codeword with precoding information |
| DCI format 1C | used for very compact scheduling of one PDSCH codeword |
| DCI format 1D | used for the compact scheduling of one PDSCH codeword with precoding and power offset information |
| DCI format 2 | used for scheduling PDSCH to UEs configured in closed-loop spatial multiplexing mode |
| DCI format 2A | used for scheduling PDSCH to UEs configured in open-loop spatial multiplexing mode |
| DCI format 3 | used for the transmission of TPC commands for PUCCH and PUSCH with 2-bit power adjustments |
| DCI format 3A | used for the transmission of TPC commands for PUCCH and PUSCH with single bit power adjustments |

In Table 1, DCI format 0 may indicate uplink resource allocation information. DCI format 1 and DCI format 2 may indicate downlink resource allocation information. DCI format 3 and DCI format 3A may indicate uplink transmit power control (TPC) commands for arbitrary UE groups.

DCI format 3/3A includes TPC commands of a plurality of UEs. In case of DCI format 3/3A, the eNB is masked onto CRC. TPC-ID is an ID that is demasked by a UE that monitors a PDCCH carrying a TPC command. TPC-ID may be an ID used by a UE that decodes a PDCCH to decide transmission or non-transmission of the TPC command over the PDCCH. TPC-ID may be defined by reusing conventional IDs (i.e., C-RNTI(Radio Network Temporary Identifier), PI-RNTI, SC-RNTI, or RA-RNTI), or may be defined as a new ID. TPC-ID is an ID for UEs of a specific aggregate contained in a cell, such that it is different from C-RNTI acting as an ID of a specific UE. In addition, the TPC_ID is also different from IDs (e.g., PI-RNTI, SC-RNTI and RA-RNTI) of all UEs contained in the cell. If DCI includes a TPC command for N UEs, only N UEs need to receive the TPC commands. If TPC commands for all UEs contained in the cell are contained in a DCI, the TPC-ID is used as an ID for all UEs contained in the cell.

The UE monitors an aggregate of PDCCH candidates in a search space contained in a subframe, such that it searches for TPC-ID. In this case, TPC-ID may be found either in a common search space or in a UE-specific search space. The common search space is a search space in which all UEs contained in the cell can perform the searching operation. The UE-specific search space is a search space in which a specific UE can perform the searching operation. If the CRC error is not detected by demasking a TPC-ID in the corresponding PDCCH candidate, a UE can receive a TPC command on a PDCCH.

An identifier (ID, i.e., TPC-ID) for a PDCCH carrying a plurality of TPC commands is defined. If TPC-ID is detected, the UE receives a TPC command on the corresponding PDCCH. The TPC command is used to adjust transmission (Tx) power of an uplink channel. Therefore, the TPC command can prevent data or information from being transmitted to an eNB due to wrong power control, or can also prevent interference for other UEs.

A method for allowing an eNB to perform resource mapping for PDCCH transmission in the 3GPP LTE system will hereinafter be described in detail.

Generally, the eNB may transmit scheduling allocation information and other control information over the PDCCH. Information about a physical control channel (PCCH) is configured in the form of one aggregate (one aggregation) or several CCEs, such that the resultant information is transmitted as one aggregate or several CCEs. Namely, a PDCCH transmission unit of the eNB is a CCE. One CCE includes 9 resource element groups (REGs). The number of RBGs unallocated to either Physical Control Format Indicator Channel (PCFICH) or Physical Hybrid Automatic Repeat Request Indicator Channel (PHICH) is $N_{REG}$. CCEs from 0 to $N_{CCE}$-1 may be available to a system

$$N_{CCE} = \lfloor N_{REG} / 9 \rfloor$$

). PDCCH supports multiple formats as shown in the following Table 3. One PDCCH composed of n contiguous CCEs begins with a CCE having 'i mod n = 0' (where 'i' is a CCE number). Multiple PDCCHs may be transmitted through one subframe.

[Table 2]

| PDCCH format | Number of CCEs | Number of resource-element groups | Number of PDCCH bits |
|---|---|---|---|
| 0 | 1 | 9 | 72 |
| 1 | 2 | 18 | 144 |
| 2 | 4 | 36 | 288 |
| 3 | 8 | 72 | 576 |

Referring to Table 2, an eNode B (eNB) may decide a PDCCH format according to how many regions are required for the BS to transmit control information. The UE reads control information and the like in units of a CCE, resulting in reduction of overhead.

Referring to FIG. 4(b), an uplink (UL) subframe may be divided into a control region and a data region in a frequency domain. The control region may be assigned to a Physical Uplink Control Channel (PUCCH) carrying uplink control information (UCI). The data region may be assigned to a Physical Uplink Shared Channel (PUSCH) carrying user data. In order to maintain single carrier characteristics, one UE does not simultaneously transmit PUCCH and PUSCH. PUCCH for one UE may be assigned to a Resource Block (RB) pair in one subframe. RBs of the RB pair occupy different subcarriers in two slots. The RB pair assigned to PUCCH performs frequency hopping at a slot boundary.

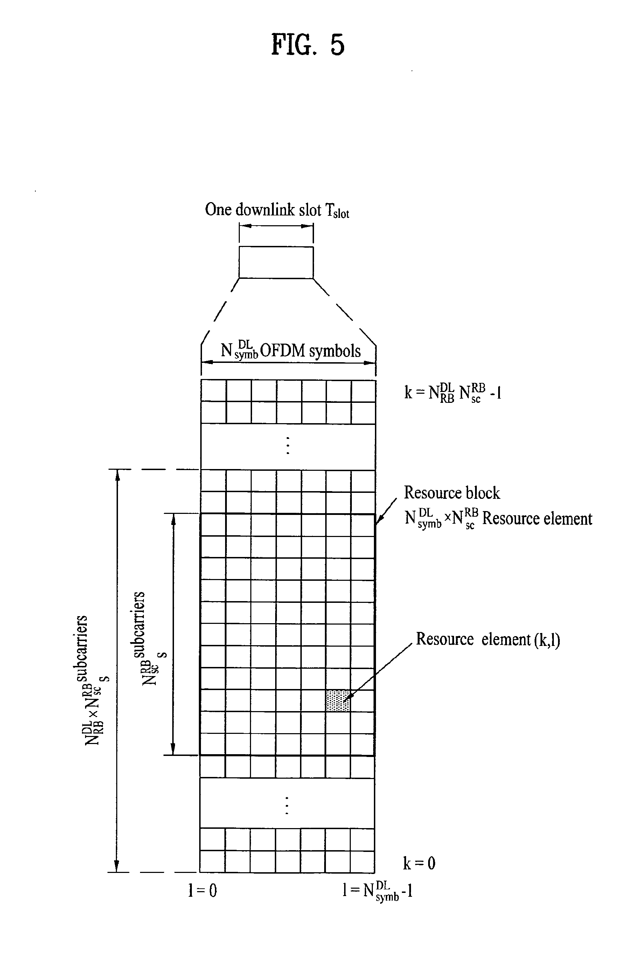

FIG. 5 shows a downlink time-frequency resource grid structure according to the present invention.

Referring to FIG. 5, downlink transmission resources can be described by a resource grid including $N_{RB}^{DL} \times N_{SC}^{RB}$ subcarriers and $N_{symb}^{DL}$ OFDM symbols. Here, $N_{RB}^{DL}$ represents the number of resource blocks (RBs) in a downlink, $N_{SC}^{RB}$ represents the number of subcarriers constituting one RB, and $N_{RB}^{DL}$ represents the number of OFDM symbols in one downlink slot. $N_{RB}^{DL}$ varies with a downlink transmission bandwidth constructed in a cell, and must satisfy $N_{RB}^{\min,DL} \leq N_{RB}^{DL} \leq N_{RB}^{\max,DL}$. Here, $N_{RB}^{\min,DL}$ is the smallest downlink bandwidth supported by the wireless communication system, and $N_{RB}^{\max,DL}$ is the largest downlink bandwidth supported by the wireless communication system. Although $N_{RB}^{\min, DL}$ may be set to 6 ( $N_{RB}^{\min,DL} = 6$ ) and $N_{RB}^{\max,DL}$ may be set to 110 ( $N_{RB}^{\max,DL} = 110$ ), the scopes of $N_{RB}^{\min, UL}$ and $N_{RB}^{\max,UL}$ are not limited thereto. The number of OFDM symbols contained in one slot may be differently defined according to the length of a Cyclic Prefix (CP) and spacing between subcarriers. When transmitting data or information via multiple antennas, one resource grid may be defined for each antenna port.

Each element contained in the resource grid for each antenna port is called a resource element (RE), and can be identified by an index pair (k,l) contained in a slot, where k is an index in a frequency domain and is set to any one of $0,..., N_{RB}^{DL} N_{sc}^{RB} - 1$, and l is an index in a time domain and is set to any one of $0,..., N_{symb}^{DL} - 1$.

Resource blocks (RBs) shown in FIG. 5 are used to describe a mapping relationship between certain physical channels and resource elements (REs). The RBs can be classified into physical resource blocks (PRBs) and virtual resource blocks (VRBs). One PRB is defined by $N_{symb}^{DL}$ consecutive OFDM symbols in a time domain and $N_{SC}^{RB}$ consecutive subcarriers in a frequency domain. $N_{symb}^{DL}$ and $N_{SC}^{RB}$ may be predetermined values, respectively.

For example, $N_{symb}^{DL}$ and $N_{SC}^{RB}$ may be given as shown in the following Table 1. Therefore, one PRB may be composed of $N_{symb}^{DL} \times N_{SC}^{RB}$ resource elements. One PRB may correspond to one slot in a time domain and may also correspond to 180kHz in a frequency domain, but it should be noted that the scope of the present invention is not limited thereto.

[Table 3]

| Configuration | | $N_{SC}^{RB}$ | $N_{symb}^{DL}$ |
|---|---|---|---|
| Normal Cyclic Prefix | $\Delta f$ = 15 kHz | 12 | 7 |
| Extended Cyclic Prefix | $\Delta f$ = 15 kHz | | 6 |
| | $\Delta f$ = 7.5 kHz | 24 | 3 |

The PRBs are assigned numbers from 0 to $N_{RB}^{DL} - 1$ in the frequency domain. A PRB number $n_{\mathrm{PRB}}$ and a resource element index ($k,l$) in a slot can satisfy a predetermined relationship denoted by $n_{\mathrm{PRB}} = \left\lfloor \dfrac{k}{N_{sc}^{\mathrm{RB}}} \right\rfloor$.

The VRB may have the same size as that of the PRB. The VRB may be classified into a localized VRB (LVRB) and a distributed VRB (DVRB). For each VRB type, a pair of PRBs allocated over two slots of one subframe is assigned a single VRB number $n_{\mathrm{VRB}}$.

The VRB may have the same size as that of the PRB. Two types of VRBs are defined, the first one being a localized VRB (LVRB) and the second one being a distributed type (DVRB). For each VRB type, a pair of PRBs may have a single VRB index (which may hereinafter be referred to as a 'VRB number') and are allocated over two slots of one subframe. In other words, $N_{RB}^{DL}$ VRBs belonging to a first one of two slots constituting one subframe are each assigned any one index of 0 to $N_{RB}^{DL} - 1$, and $N_{RB}^{DL}$ VRBs belonging to a second one of the two slots are likewise each assigned any one index of 0 to $N_{RB}^{DL} - 1$.

A method for allowing the eNB to transmit a PDCCH to an UE in the LTE system will hereinafter be described in detail.

The eNB determines a PDCCH format according to a DCI to be sent to the UE, and attaches a Cyclic Redundancy Check (CRC) to control information. A unique identifier (e.g., a Radio Network Temporary Identifier (RNTI)) is masked onto the CRC according to PDCCH owners or utilities. In case of a PDCCH for a specific UE, a unique ID of a UE, for example, C-RNTI (Cell-RNTI) may be masked onto CRC. Alternatively, in case of a PDCCH for a paging message, a paging indication ID (for example, R-RNTI (Paging-RNTI)) may be masked onto CRC. In case of a PDCCH for system information (SI), a system information ID (i.e., SI-RNTI) may be masked onto CRC. In order to indicate a random access response acting as a response to UE's random access preamble transmission, RA-RNTI (Random Access - RNTI) may be masked onto CRC. The following Table 4 shows examples of IDs masked onto PDCCH.

[Table 4]

| Type | Identifier | Description |
|---|---|---|
| UE-specific | C-RNTI | used for the UE corresponding to the C-RNTI. |

(continued)

| Type | Identifier | Description |
|---|---|---|
| Common | P-RNTI | used for paging message. |
| | SI-RNTI | used for system information (It could be differentiated according to the type of system information). |
| | RA-RNTI | used for random access response (It could be differentiated according to subframe or PRACH slot index for UE PRACH transmission). |
| | TPC-RNTI | used for uplink transmit power control command (It could be differentiated according to the index of UE TPC group). |

If C-RNTI is used, PDCCH may carry control information for a specific UE. If another RNTI is used, PDCCH may carry common control information that is received by all or some UEs contained in the cell. The eNB performs channel coding of the CRC-added DCI so as to generate coded data. The eNB performs rate matching according to the number of CCEs allocated to a PDCCH format. Thereafter, the eNB modulates the coded data so as to generate modulated symbols. In addition, the eNB maps the modulated symbols to physical resource elements.

In accordance with the current standards (3GPP TS 36.321, 36.213, 36.133), medium access control (MAC) elements transmitted from the UE include a buffer status report (BSR) control element and a power headroom report (PHR) control element. The BSR control element is generated by a buffer status report process, such that it reports the amount of data contained in an uplink buffer to the eNB acting as the service provider. The PHR control element is generated by the PHR process, such that the UE reports a current power status (i.e., the amount of remaining power) to the eNB. The eNB can effectively distribute radio resources according to information regarding both a UE-reported uplink buffer status and a power headroom, and can also decide scheduling.

Generally, the UE can trigger the power headroom report (PHR) in case of generating the following events (1) and (2).

(1) A timer (prohibitPHR-Timer) for prohibiting the power headroom report stops operation, and the change of transmission path loss using a UE is greater than a predetermined value (DL_PathlossChange).

(2) If a periodic report timer (PeriodicPHR-Timer) has expired, this situation is referred to as a periodic PHR. After the power headroom report is generated, assuming that the UE includes newly-transmitted uplink transmission resources distributed by the eNB in a current transmission time period, the PHR control element is generated from the power headroom value obtained from a physical layer, and the timer (prohibitPHR-Timer) is driven again.

Besides, provided that the periodic power boundary headroom report is generated, the periodic report timer (PeriodicPHR-Timer) is driven again. In association with the detailed operations of the power headroom report (PHR) process, it may be necessary to refer to associated technology standards (3GPP TS 36.321, 36.213, 36.133).

3GPP(3rd Generation Partnership Project) may refer to the next-generation wireless communication system as the LTE-A system, such that it can satisfy the future-oriented service request. The LTE-A system employs carrier aggregation (CA) technology, and multiple component carriers (CCS) are aggregated for transmission, such that a transmission bandwidth of a UE is increased and the use efficiency of a frequency is also increased.

The current CA technology has the following characteristics.

(1) Aggregation of contiguous component carriers (CCs) is supported, and aggregation of non-contiguous CCs is supported.

(2) The number of UL carrier aggregations (CAs) may be different from the number of DL CAs. If it is necessary for the current CA technology to be compatible with the previous system, UL and DL must configure the same number of CCs.

(3) Different numbers of CCs are configured in UL and DL such that different transmission bandwidths can be obtained.

(4) In association with the UE, each CC independently transmits one transport block, and an independent hybrid automatic repeat request (HARQ) mechanism is used.

In order to allow the UE to report a power headroom according to CA technology applied to the LTE-A system, a method for signaling a power control message to a UE by an eNB will hereinafter be described in detail.

In accordance with various embodiments of the present invention, an uplink power control method defined in the legacy single-carrier (carrier) is extended and applied as a method for signaling a TPC command supporting multiple carriers (or a plurality of carriers).

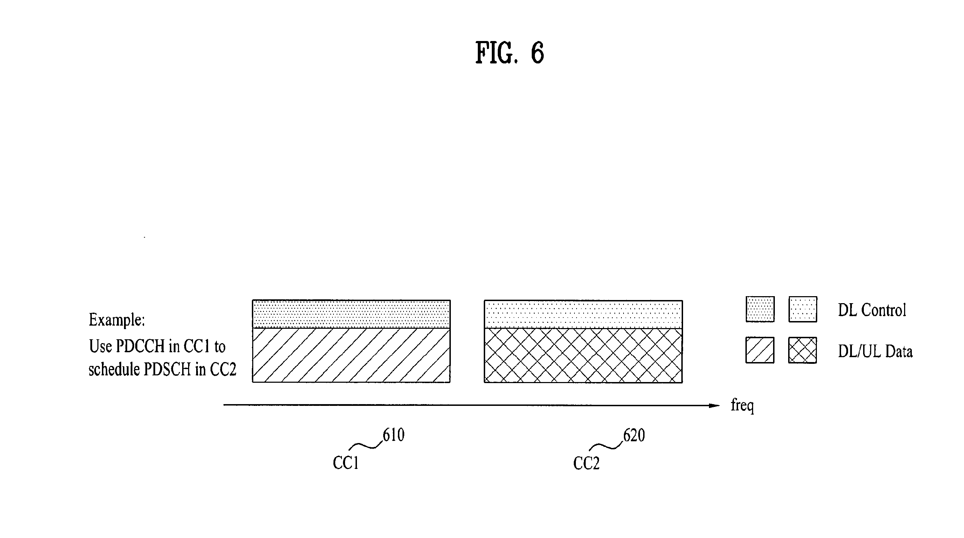

As previously stated above, DCI format 3/3A has been desined to transmit a TPC command in units of a group. DCI format 3/3A is received through a PDCCH of a DL carrier. In case of considering the cross-carrier scheduling, the eNB must support a method for creating a TPC command in transmitting UL data/control information through one or more UL carriers. In this case, the cross-carrier scheduling described in the present invention will hereinafter be described with reference to FIG. 6.

FIG. 6 is a conceptual diagram illustrating exemplary cross-carrier scheduling needed when carrier aggregation technology is introduced into the LTE-A system.

DL cross-carrier scheduling is exemplarily shown in FIG. 6. The cross-carrier scheduling means that an eNB transmits control information (PDCCH) at a component carrier 1 (610) on the condition that there are multiple CCs, and such control information is used as a control information of CC 2 (620). Likewise, in order to allow the eNB to schedule a PDSCH at a Carrier 2 (620), the eNB may use a PDCCH at a component carrier 1 (610). Such cross-carrier scheudling may also be applied to uplink scheduling.

TPC-commands are classified into PUSCH TPC-command and PUCCH TPC-command. Generally, TPC commands for PUSCH and PUCCH scheduled by the eNB may be controlled by DCI format 0 (1A/1B/1D/1/2A/2) classified into C-RNTI or SPS (Semi-Persistent Scheduling) C-RNTI. DCI format 3/3A may be updated per subframe in all transmission periods excluding a discontinuous reception (DRX) period. Besides, DCI format 3/3A may be used to control UL power.

DCI format 3/3A is scrambled into TPC-PUSCH-RNTI and TPC-PUCCH-RNTI, such that the UE can discriminate between PUSCH and PUCCH and performs decoding on the basis of the discriminated result. DCI formats 3 and 3A have a 2-bit command and a 1-bit command, respectively, such that the number of maximum power commands of the DCI format 3 is set and the number of maximum power commands of the DCI format 3A is set.

In this case, it is assumed that the UE receives signaling information of a TPC-index from a higher layer. In accordance with the Rel-8 LTE system, a TPC-index is set to any one of integers from 1 to 15 in case of DCI format 3, a TPC-index is set to any one of integers from 1 to 31. The LTE-A system may also consider a method for indicating the TPC index using a bitmap format, instead of a method for indicating the TPC index using an integer value. However, since the method of the legacy LTE system can be reused and the signaling overhead is used, the method for indicating the TPC index using the integer value may be preferably used. The signaling method based on a bitmap or the signaling method based on an index may be determined according to the number of actual carrier aggregations (CAs).

That is, a 4-bit index is used in DCI format 3 and a 5-bit index is used in DCI format 3A. If the number of aggregated carriers is denoted by Nu, 4Nu bits and 5Nu bits are needed for 4-bit index and 5-bit index, respectively. If the number of such bits is higher than 15 or 31, this situation may be far from efficient, such that a threshold value for discriminating between 15 and 31 may be changed according to an actual value of Nu. Nu to be used as a threshold value may be used as information notified by an eNB, or may be used as a predetermined value.

**First embodiment of Method for signaling power control message**

An eNode B (eNB) discriminates between DCI format 3 and DCI format 3A according to PUSCH and PUCCH, and collects TPC commands needed for individual carriers according to a UE (or a user) such that it may transmit the collected TPC commands to one TPC command group. That is, one TPC-PUSCH-RNTI and one TPC-PUCCH-RNTI are used for each UE, such that a PUSCH TPC-command for one or more carriers is transmitted using one TPC-PUSCH-RNTI and a PUCCH TPC-command for one or more carriers is transmitted using one TPC-PUCCH-RNTI, and thus the UE decodes the resultant TPC-commands. In order to support the above-mentioned method, it is necessary to design a method for transmitting a TPC command for multiple carriers for each UE to one TPC-PUSCH-RNTI (or TPC-PUCCH-RNTI).

In the Rel-8 LTE system, if the eNB transmits a TPC index on the basis of an integer value and performs cross-carrier scheduling, several TPC indexes may be sent to the UE. Alternatively, the eNB may transmit the TPC index to the UE using a bitmap scheme.

The eNB may inform the UE of information as to which carrier is mapped to the corresponding TPC index through higher layer signaling, or may implicitly inform the UE of the same information. As a method for implicitly informing the UE of information as to which carrier is mapped to the corresponding TPC index, the TPC index may be implicitly mapped to the corresponding carriers (for example, as a predetermined rule, TPC indexes starting from the lowest TPC index may be sequentially mapped to the lowest carrier index (or number)). Even in the case of cross-carrier scheduling, each UE can recognize information regarding cross-carrier scheduled carriers through a separate carrier indicator, such that it is implicitly recognize information as to which carrier is mapped to the corresponding TPC index.

Even in the case of the method for enabling the eNB to perform signaling using the bitmap scheme, each UE has already recognized the number of configured aggregated carriers and index information, such that the UE may recognize power control for each carrier according to the order appearing in bitmap.

As another example, the eNB may allocate a TPC command for multiple carriers of one UE using contiguous TPC indexes. In addition, the eNB may inform the UE of a start point of TPC indexes and the number of TPC indexes.

As still another example, the eNB may allocate contiguous TPC indexes to each UE, and may inform each UE of only one TPC index using an integer value in the same manner as in the legacy Rel-8 LTE system. In this case, the TPC index may be set to a start value of contiguous TPC indexes. Accordingly, each UE can recognize information regarding cross-carrier scheduled carriers through a separated carrier indicator, such that information as to how many signaled TPC indexes have been allocated to the corresponding UE or information as to which carrier is mapped to the corresponding TPC index can be implicitly recognized. In this case, it is assumed that each UE has already recognized information regarding its own carrier allocation information, and TPC commands are allocated to individual carrier indexes one by one. Examples associated with the above description are shown in the following Table 5.

| TPC- command | TPC-index | |
|---|---|---|
| TPC-command #1 | TPC index for UE 1 | Carrier Index 1 for UE 1 |
| TPC-command #2 | | Carrier Index 2 for UE 1 |
| TPC-command #3 | TPC index for UE 2 | Carrier Index 1 for UE 2 |
| TPC-command #4 | | Carrier Index 2 for UE 2 |
| TPC-command #5 | | Carrier Index 3 for UE 2 |
| ... | ... | ... |
| TPC-command #N | TPC index for UE K | Carrier Index K for UE K |

Referring to Table 5, for convenience of description and better understanding of the present invention, it is assumed that UE 1 transmits UL data over PUSCH in two UL carriers such that a TPC-command is needed for each of the two UL carriers. DCI format 3/3A uses one TPC-PUSCH-RNTI and requires only one TPC-index. As can be seen from Table 5, the TPC-index is determined through a higher layer, such that it is necessary for the eNB to inform the UE of only one TPC-index value. If the UE recognizes the start position through the TPC-index, each UE may implicitly map the recognized TPC index to a known carrier index through a carrier indicator. For example, as shown in Table 5, a TPC-command may be mapped in ascending numerical order of carrier indexes,

In this case, since the UE can control power of multiple carriers by allocating one TPC-index to each of TPC-PUSCH-RNTI and TPC-PUCCH-RNTI, the necessity of allocating RNTIs to respective carriers and the necessity of using several TPC indexes may be greatly reduced. In addition, the eNB needs to allocate RNTIs to respective carriers and also needs to signal several TPC indexes, resulting in reduction in overhead.

In this case, if an index of a TPC command is indicated, the above-mentioned system can be operated in the same manner as in the legacy Rel-8 LTE system. That is, an indication method for one carrier is used without change, and the number of contiguous commands may be implicitly indicated or the eNB may inform the UE of the number of contiguous commands differently from the legacy index command. For example, provided that one UE is operated with one carrier and is then operated with two UL carriers, the eNB may utilize an implicit method for employing as many contiguous TPC commands as the number of configured carriers, instead of transmitting TPC-index information in the legacy TPC-command structure. On the other hand, if the eNB has to perform coordination, the eNB may independently inform the UE of the number of elements capable of being contiguously used.

Provided that the eNB transmits DCI format 3/3A and at the same time transmits a UL grant TPC-command through DCI format 0, the UL grant TPC-command of the DCI format is overridden in a PTC command of the DCI format 3/3A. Alternatively, a TPC command of the DCI format 3/3A may be overridden in a UL grant TPC-command of a DCI format.

In this case, only a TPC command for redundant (or duplicate) carriers is applied to the operations of the overridden TPC command, and the remaining parts may enable a grouped TPC command to be efficient. For example, provided that a UE-received TPC command is a command of multiple uplink carriers and only one UL grant exists, only power control of each part including the UL grant may follow the UL grant, and the remaining carriers may utilize a group TPC command. Alternatively, if the group TPC command exists, a TPC command of the UL grant may be discarded.

As described above, a first embodiment for the power control message signaling method shows an exemplary case in which a TPC-command is transmitted to all carriers, such that the following method may be used to reduce overhead.

The UE can recognize information as to which carrier is a carrier received from the UL grant TPC-command. Accordingly, when mapping carriers to contiguous TPC-indexes transmitted in DCI format 3/3A, if there is a transmission carrier through which the UL grant TPC-command is transmitted, the DCI format 3/3A is configured only in the remaining carriers other than the above transmission carrier. In addition, if the eNB informs the UE of a single start TPC-index, the UE may perform mapping of the corresponding carrier.

The eNB may transmit all the group TPC-commands in a cell-specific primary carrier or in one arbitrary carrier (in this case, information of the corresponding carrier may be signaled). The eNB may also configure a TPC-command of each UE as a group TPC-command in a primary carrier of each UE. That is, the eNB transmits a TPC-command of each UE through a primary carrier of each UE, and UEs having the same carrier may receive a TPC-command in the same carrier.

As described above, if the eNB configures a TPC-command of each UE in one RNTI, the UE can reduce a search process burden needed for decoding the TPC-command.

<u>Second Embodiment of Method for signaling power control message</u>

In accordance with a second embodiment of the power control message signaling method according to the present invention, the eNB may allocate a group TPC-command of multiple carriers to different groups using different RNTI of individual carriers. Differently from the first embodiment of the power control message signaling method, the eNB can transmit the DCI format 3/3A in different ways according to individual carriers. That is, each UE may allocate different RNTIs to individual carriers, and may allocate a TPC-index or RNTI-common TPC-index to each RNTI.

In addition, the eNB may user-specifically perform RNTI allocation, or may carrier-specifically perform RNTI allocation. Provided that the eNB may carrier-specifically perform RNTI allocation (i.e., allocation of one or more RNTIs), this means that the eNB is able to group a TPC-command of a UE, that needs to perform TPC-command transmission in the corresponding carrier, using the corresponding RNTI. That is, a TPC-command grouped into one RNTI may be a TPC-command for the same carrier. Therefore, as can be seen from the above description, since a carrier and an RNTI may be mapped to each other on a one to one basis, the eNB may broadcast the allocation relationship between the carrier and the RNTI to the UE using L1/L2 control signaling or higher layer signaling. Alternatively, the eNB may also perform unicast signaling for each UE.

Provided that the eNB may UE-specifically allocate the RNTI for TPC-command transmission, each UE can receive the RNTI of several carriers, but TPC-commands of different UEs grouped by the same RNTI may not be associated with the same carrier. In this case, the eNB must perform unicast signaling for each UE in association with the mapping relationship between the RNTI and the carrier for each UE.

In all the above-mentioned cases, the eNB may transmit each group TPC-command scrambled by different RNTIs within one or more carriers, or may also transmit the same group TPC-command within each carrier. If the eNB transmits the group TPC-command through a single carrier, the eNB may cell-specifically the TPC command through a primary carrier or an arbitrary predetermined carrier. In addition, the eNB may signal associated information to the UE through appropriate L1/L2 signaling or higher layer signaling. However, information as to which carrier is to be used for transmission data from the eNB may be predetermined as necessary.

Generally, the eNB may perform signaling in the same carrier as a transmission carrier of a group TPC-command. If the eNb transmits group TPC-commands through multiple carriers, the eNB may inform the UE of the mapping relationship between the carrier and the group TPC-command through L1/L2 signaling or higher layer signaling, etc. In this case, if the TPC command is transmitted to a carrier, it is necessary for the TPC command to indicate the corresponding target carrier, and this operation may be achieved by allocating multiple TPC RNTIs to the UE.

On the contrary, instead of using multiple TPC RNTIs, a carrier index field may be contained in a DCI format. In this case, the resultant DCI format may be defined using one TPC RNTI.

The power control message signaling methods have been disclosed with reference to the above-mentioned first and second embodiments. In accordance with another embodiment of the present invention, the first and second embodiments may be combined with each other. In more detail, the eNB may transmit a TPC command to each UE through several RNTIs, and each UE may allocate multiple TPC indexes to individual groups corresponding to individual RNTIs. In this case, the location of an allocated TPC-index and the number of allocated TPC-indexes may be identical to or different from one another in individual groups. The relationship between a group TPC and a grant TPC in the second embodiment of the power control message signaling method may be used in the same manner as in the first embodiment of the power control message signaling method.

In accordance with the first and second embodiments of the power control message signaling method, provided that a TPC command occupies a large-sized common search space so as to support multiple carriers (or multi-carrier), a common search space may be extended. That is, although a TPC command of the legacy LTE structure is transmitted to the common search space, more TPC commands or a modified TPC command may be transmitted through the extended common search space. The extended common search space may be separated from the legacy common search space, a contiguous space may be located next to a region occupied by the common search space from among the search space, or may exist in an arbitrarily-fixed space (logical CCE index).

<u>Third Embodiment of Method for signaling power control message</u>

The eNB may independently apply the group TPC-command transmission method for use in the Rel-8 LTE system to each carrier. That is, the power control message signaling method of the third embodiment can equally apply the method for use in a single carrier of the legacy Rel-8 LTE system to each carrier from among multiple carriers. That is, the method for transmitting the group TPC-command using DCI format 3/3A used in the legacy Rel-8 LTE system can be applied to UEs, each of which transmits data to an uplink carrier linked to the corresponding downlink carrier, can be utilized without change.

If the ratio (DL:UL) of the number of DL carriers and the number of UL carriers is set to 1:1 or N:1 such that carrier aggregation (CA) is decided, the third embodiment may be used according to a cell-specific DL-UL linkage relationship.

If the ratio (DL:UL) of the number of DL carriers and the number of UL carriers is set to 1:N, a combination of the power control message signaling method of the first embodiment or the other power control message signaling method of the second embodiment may be used as necessary. For example, it is basically assumed that the group TPC-command is carrier-specifically configured and then transmitted to the corresponding carrier as a default. If DL:UL is set to 1:N, the eNB may transmit not only a TPC-command of the corresponding carrier but also a group TPC-command of other carriers within only one carrier. In this case, it is necessary for the eNB to inform the UE of information regarding the linkage between a cell-specific group TPC-command and an actually-transmitted DL carrier through appropriate L1/L2 signaling or higher layer signaling. Alternatively, provided that the UE can recognize the cell-specific linkage relationship through additional signaling, this cell-specific linkage relationship may be applied to the third embodiment without change.

As can be seen from the above-mentioned third embodiments, in order to allocate power to each of PUSCH and PUCCH transmitted through multiple carriers, it is necessary to search for and decode one or more DCI formats 3/3A identified by TPC-PUSCH-RNTI and TPC-PUCCH-RNTI.

However, the following description relates to a method for allowing the UE to simultaneously control a PUSCH and a PUCCH using only one RNTI without discriminating between the PUCCH and the PUSCH, and a detailed description thereof will hereinafter be described in detail. That is, the following method enables the eNB to apply one common TPC command instead of discriminating/transmitting each TPC-command. For example, the UE may use two carriers for UL transmission. Provided that Carrier Index 1 transmits a PUSCH and a PUCCH and Carrier Index 2 transmits a PUSCH, the eNB transmits only one TPC command to Carrier Index 1 and transmits only one TPC command to Carrier Index 2. Carrier Index 1 can be evenly applied to PUSCH and PUCCH using only one TPC command.

From among several carrier indexes allocated to the UE, the UE may pre-recognize its own uplink primary carrier (or an uplink carrier combined to a downlink primary carrier). Primary carriers of individual UEs may be different from each other. When the UE attempts to transmit a control channel only withn a primary carrier, the UE may transmit a PUSCH and/or a sounding reference signal (SRS) within other carriers. Needless to say, the UE may also transmit PUSCH even within the primary carrier. The SRS commonly uses a TPC-command of the PUSCH, such that an additional TPC-command need not be used. In case of using the above-mentioned scheme, PUCCH transmission may cause little change even in the carrier aggregation (CA) situation.

It is assumed that DCI format 3/3A for TPC-command transmission is transmitted over a PDCCH of one arbitrary downlink carrier or a primary carrier. When the eNB transmits PDCCH-DCI format 3/3A for each carrier through multiple carriers, the eNB can minimize difficulty or inconvenience of the UE that searches for a message allocated to the UE itself and decodes the message. However, if the number of UL carriers is higher than the number of single carriers of the legacy LTE system, the amount of information to be transmitted through a downlink carrier may be increased as many as a maximum number of UL carriers.

The above-mentioned system may not be efficiently supported in a control channel structure configured in the LTE system. In this case, instead of increasing as many control channel structures of the LTE system as the number of UL carriers, or instead of maintaining the legacy structure without change, the method for transmitting information regarding an insufficient part over a PDSCH may be considered in the present invention.

Exemplary embodiments described hereinbelow are combinations of elements and features of the present invention. The elements or features may be considered selective unless mentioned otherwise. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. Also, it will be obvious to those skilled in the art that claims that are not explicitly cited in the appended claims may be presented in combination as an exemplary embodiment of the present invention or included as a new claim by subsequent amendment after the application is filed.

It will be apparent to those skilled in the art that the present invention can be embodied in other specific forms without departing from the spirit and essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

**Industrial Applicability**

A method and apparatus for transmitting/receiving uplink transmit power control (TPC) information to support multiple carriers according to embodiments of the present invention can be applied to various mobile communication systems, for example, 3GPP LTE, LTE-A, IEEE 802 system, and the like.

**Claims**

1. A method for transmitting uplink transmit power control (TPC) information by an eNode B (eNB) in a multi-carrier support communication system comprising:

   transmitting a downlink control information (DCI) message including TPC information to each user equipment (UE) through a physical downlink control channel (PDCCH),
   wherein the DCI message includes contiguous TPC index value information allocated to the multiple carriers for each UE and each TPC command corresponding to each of the contiguous TPC index values, and
   wherein the each TPC command corresponds to each of the multiple carriers.

2. The method according to claim 1, wherein the DCI message further includes at least one of a radio network temporary identifier (RNTI) for a physical uplink control channel (PUCCH) for each UE and an RNTI for one physical uplink shared channel (PUSCH).

3. The method according to claim 1, further comprising:

   transmitting one TPC index value from among contiguous TPC index values allocated to the multiple carriers for the each UE through a higher layer signaling.

4. The method according to claim 3, further comprising:

   transmitting a carrier indicator including information regarding a cross-carrier scheduled carrier to each UE.

5. The method according to claim 3, wherein one signaled TPC index value is a TPC index start value from among the contiguous TPC index values.

6. The method according to claim 5, wherein the contiguous TPC index values from a TPC index value corresponding to the TPC index start value of the each UE corresponds to an uplink carrier index allocated to the each UE.

7. The method according to claim 6, wherein a lowest TPC index of the contiguous TPC index values allocated to the each UE is first mapped to the lowest uplink carrier index allocated to the each UE in such a manner that the contiguous TPC index values starting from the lowest TPC index are sequentially mapped to uplink carrier indexes arranged in ascending numerical order.

8. The method according to claim 4, wherein the one signaled TPC index value is a TPC index start value from among the contiguous TPC index values.

9. The method according to claim 8, wherein the contiguous TPC index values starting from a TPC index value corresponding to a TPC index start value of the each UE corresponds to an uplink cross-carrier index allocated to the each UE.

10. The method according to claim 9, wherein a lowest TPC index of the contiguous TPC index values allocated to the each UE is first mapped to the lowest uplink cross-carrier index allocated to the each UE in such a manner that the contiguous TPC index values starting from the lowest TPC index are sequentially mapped to uplink cross-carrier indexes arranged in ascending numerical order.

11. The method according to claim 1, wherein the each UE is a UE comprised of a group for the TPC command.

12. A method for receiving uplink transmit power control (TPC) information by a user equipment (UE) in a multi-carrier support communication system comprising:

    receiving a downlink control information (DCI) message including the TPC information from an eNode B (eNB) through a physical downlink control channel (PDCCH),

wherein the DCI message includes contiguous TPC index value information allocated to the multiple carriers for each UE and each TPC command corresponding to each of the contiguous TPC index values, and wherein the each TPC command corresponds to each of the multiple carriers.

13. The method according to claim 12, further comprising:

decoding at least one of a radio network temporary identifier (RNTI) for a physical uplink control channel (PUCCH) for each UE and an RNTI for one physical uplink shared channel (PUSCH), the two RNITs being included in the DCI message.

14. The method according to claim 13, further comprising:

receiving one TPC index value from among contiguous TPC index values allocated to the multiple carriers of the each UE from the eNode B (eNB).

15. The method according to claim 14, further comprising:

receiving a carrier indicator including information regarding a cross-carrier scheduled carrier from the eNode B (eNB).

16. The method according to claim 15, wherein one signaled TPC index value is a TPC index start value from among the contiguous TPC index values.

17. The method according to claim 16, wherein the contiguous TPC index values from a TPC index value corresponding to the TPC index start value of the each UE corresponds to an uplink carrier index allocated to the each UE.

18. An eNode B (eNB) apparatus for transmitting uplink transmit power control (TPC) information in a multi-carrier support communication system comprising:

a transmitter for transmitting a downlink control information (DCI) message including the TPC information to each user equipment (UE) through a physical downlink control channel (PDCCH), wherein the DCI message includes contiguous TPC index value information allocated to the multiple carriers for each UE and each TPC command corresponding to each of the contiguous TPC index values, and each TPC command corresponds to each of the multiple carriers.

19. A user equipment (UE) apparatus for receiving uplink transmit power control (TPC) information in a multi-carrier support communication system comprising:

a receiver for receiving a downlink control information (DCI) message including the TPC information from an eNode B (eNB) through a physical downlink control channel (PDCCH), wherein the DCI message includes contiguous TPC index value information allocated to the multiple carriers for each UE and each TPC command corresponding to each of the contiguous TPC index values, and each TPC command corresponds to each of the multiple carriers.

20. The UE apparatus according to claim 19, further comprising:

a processor for decoding at least one of a radio network temporary identifier (RNTI) for a physical uplink control channel (PUCCH) for each UE and an RNTI for one physical uplink shared channel (PUSCH), the two RNITs being included in the DCI message.

21. The UE apparatus according to claim 20, further comprising:

a receiver for receiving information of one TPC index value from among contiguous TPC index values allocated to multiple carriers for each UE from the eNode B (eNB) and a carrier indicator including information regarding a cross-carrier scheduled carrier, wherein the processor matches the TPC command corresponding to each of contiguous allocated TPC indexes starting from the one received TPC index value to an index of the cross-carrier scheduled carrier, thereby controlling transmission power of the multiple carriers.

# FIG. 1

E-UMTS

FIG. 2

EP 2 496 026 A2

# FIG. 3

1 radio frame, $T_f = 307200T_s = 10ms$

1 slot, $T_{slot} = 15360T_s = 0.5ms$

| #0 | #1 | #2 | #3 | $\cdots$ | #18 | #19 |
|----|----|----|----|----------|-----|-----|

1 subframe

# FIG. 4

Control region   Data region

1st slot   2nd slot

Freq.

Subframe

Time

(a)

Control Region

Data Region

RB pair

One slot   One slot

Freq.

Subframe

Time

(b)

# FIG. 5

One downlink slot $T_{slot}$

$N_{symb}^{DL}$ OFDM symbols

$k = N_{RB}^{DL} N_{sc}^{RB} - 1$

Resource block
$N_{symb}^{DL} \times N_{sc}^{RB}$ Resource element

Resource element (k,l)

$N_{RB}^{DL} \times N_{sc}^{RB}$ subcarriers

$N_{sc}^{RB}$ subcarriers

$k = 0$

$l = 0$

$l = N_{symb}^{DL} - 1$

## FIG. 6

DL Control

DL/UL Data

freq

CC1  610

CC2  620

Example:
Use PDCCH in CC1 to
schedule PDSCH in CC2